# EUROPEAN PATENT SPECIFICATION

(11) **EP 0 324 269 B1**
(45) Date of publication and mention of the grant of the patent: **27.07.1994**
(21) Application number: 88312252.5
(22) Date of filing: 22.12.1988
(51) Int. Cl.: H04N 1/028

(54) **Multi-chip type image sensors**
Bildsensor mehrerer Chips
Capteur d'image à plusieurs puces

(30) Priority: 14.01.1988 JP 4943/88
(43) Date of publication of application: 19.07.1989
(73) Proprietor: SONY CORPORATION, Tokyo 141 (JP)
(72) Inventor: Kinoshita, Yukio Patents Division Sony Corp., Shinagawa-ku Tokyo 141 (JP)
(74) Representative: Thomas, Christopher Hugo

(56) References cited:
- EP-A- 0 091 798
- US-A- 4 005 285
- US-A- 4 477 175
- PATENT ABSTRACTS OF JAPAN vol. 8, no. 264 (E-282)(1701) 4 December 1984,& JP-A-59 135761 (CANON) 4 August 1984,

## Description

This invention relates to image sensors. Such sensors are particularly, but not exclusively, for use as original document read-out devices, for example, in copying machines or facsimile machines.

In an image sensor for sensing an original document, there is a limit to the size along the longitudinal direction of the line sensor. Therefore there has been proposed a so-called multi-chip system in which a plurality of line sensors are combined together for reading out a wider original document.

Such an image sensor may comprise an in-line system in which the line sensors are aligned, or a staggered system in which the line sensors are arranged in an interleaved relation with respect to one another. Such image sensors are described in Japanese laid open patent application 61/126861.

In an image sensor having two rows of interleaved line sensors, a line memory is required, because data read-out cannot be performed serially. Also, it is difficult to reduce or enlarge the data size. In an image sensor having a linear array of the line sensors, problems occur at the junction points of the adjoining line sensors. In the technique of the above patent application the ends of the line sensors need to be processed in a specific manner, and there is a problem in connection with the bonding accuracy.

Patent Specification US-A-4 005 285 discloses an optical system including a Koster's prism for splitting an optical path into twin paths wherein offset linear arrays of photosensors are provided on a support in an image plane and between the image plane and an object plane, the prism is provided and comprises two back-to-back 30°-60°-90° prisms together forming an equiangular prism which splits light incident from the object plane into two parallel beams which are internally reflected and pass out of the prism to form two images at the image plane.

Patent Specification EP-A-0 201 396 discloses a somewhat similar photosensitive optical detection in which two back-to-back 45°, 45°, 90° prisms with detectors in two planes mutually at right angles with the prisms therebetween. Incident light is partially reflected and partially transmitted at the common surface of the prisms to impinge on the detectors.

According to the present invention there is provided an image sensor to read out data along a straight line from an original document, the sensor comprising:
a straight-shaped focusing rod lens array having a length related to the original document read-out width, the focusing rod lens array having an optical axis extending normal to an original document surface, a light-entrance side opposable to the original document and a light-exit side opposite the light-entrance side;
characterised by;
a plurality of prisms each in the form of a triangular prism disposed end-to-end along the original document scanning direction and each having a cross-section along a direction normal to said scanning direction in the form of a right-angled triangle, each of the prisms being mounted with a first one of the surfaces thereof which define the right angle facing the light exit side of the focusing rod lens array, and with the other surfaces of alternate ones of the prisms facing in different directions to one another;
a plurality of line sensors mounted adjacent to those of said other surfaces which define the right angle and having light-receiving surfaces lying parallel to the original document scanning direction; and
a substrate having a straight-shaped slit for a read-out light source, the slit being in register with the optical axis of the focusing rod lens array.

The invention will now be described by way of example with reference to the accompanying drawings, throughout which like parts are referred to by like references, and in which:
Figure 1 is a perspective view of an embodiment of an image sensor according to the invention, with portions thereof cut away;
Figure 2 is an exploded perspective view of the image sensor of Figure 1;
Figure 3 is a sectional view taken along line III-III of Figure 1; and
Figure 4 is a sectional view taken along line IV-IV of Figure 1.

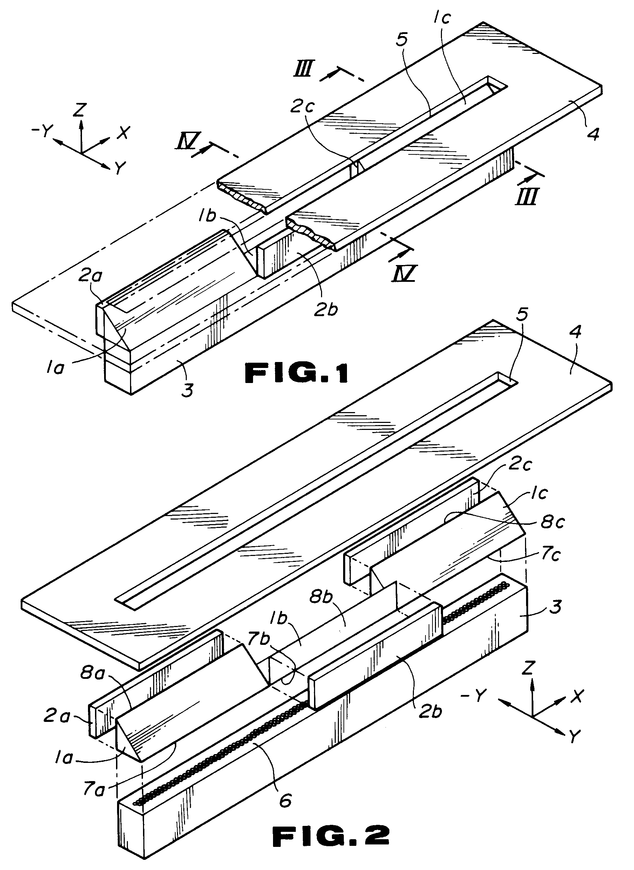

As shown in Figures 1 and 2, an image sensor comprises a focusing rod lens array 3 in the form of a regular parallelepiped, three prisms 1a, 1b and 1c forming an optical block for separately deviating or dividing the incident light path into separate light paths, line sensors 2a, 2b and 2c associated with the prisms 1a to 1c, and a base plate or substrate 4.

The focusing rod lens array 3 is provided so that its optical axis extends vertically with respect to the original document surface, that is, along the direction Z in the drawing, and is in the form of an elongate regular parallelepiped extending along the direction X in the drawing and having a length corresponding to the original document width. The rod lenses of the lens array 3 are terminated on the bottom and the upper surfaces of the lens array 3. The original document to be read-out is placed on the bottom surface of the lens array 3, while the prisms 1a to 1c are mounted on the upper surface 6 of the lens array 3.

Each of the prisms 1a to 1c has the function of changing the direction of the incident light, that is, the light travelling from the original document. Each of the prisms 1a to 1c is a triangular prism having a right-angled isosceles triangular cross-sectional shape. One of the two sides of each prism 1a to 1c together defining the right angle of the cross-section is formed as an end face 7a, 7b or 7c which is the light incident face, and the other side is formed as the other end face 8a, 8b or 8c which is the light emergent face. The longitudinal direction of each prism 1a to 1c coincides with the original document scanning direction, that is, the direction X in the drawing along which extends the lens array 3. The prism 1a has its one end face 7a resting on the upper surface 6 of the lens array 3 and its other end face 8a orientated in the -Y direction in the drawing. The prism 1b is provided adjacent to the prism 1a at the end of the X direction of the prism 1a, and has its one end face 7b lying on the upper surface 6 of the lens array 3 and its other end face 8b orientated in the Y direction of the drawing. Similarly, the prism 1c is provided adjacent to the prism 1b at the end in the X direction of the prism 1b and has its one end face 7c lying on the upper surface 6 of the lens array 3 and its other end face 8c orientated in the -Y direction in the drawing. In this manner, the end faces 8a to 8c of the prisms 1a to 1c are oriented in such a manner that the end faces 8a and 8c face in the -Y direction and the end face 8b faces in the Y direction, so that only the end face 8b of the central prism 1b has an orientation different from that of the other end faces 8a and 8c.

The line sensors 2a to 2c convert optical data of the original document obtained via the lens array 3 and the prisms 1a to 1c into corresponding electrical signals. Three line sensors 2a to 2c are provided on the other end faces 8a to 8c of the prisms 1a to 1c, respectively. In more detail, the line sensor 2a is provided on the other end face 8a of the prism 1a to receive the light proceeding along the -Y direction, while the line sensor 2b is provided on the other end face 8b of the prism 1b to receive the light proceeding in the Y direction, and the line sensor 2c is provided on the other end face 8c or the prism 1c to receive the light proceeding in the -Y direction. Each of the line sensors 2a to 2c is provided with a light receiving section (not shown) extending along a straight path in the X direction.

The substrate 4 is provided on top of the prisms 1a to 1c and the line sensors 2a to 2c, and is used for providing connection with the main body of the device. Approximately at the centre of the substrate 4, there is formed an elongate window 5 extending along the X direction. The window 5 is opened for example for transmitting light therethrough, and a linear light source or an array of point light sources is provided on top of the window 5 for directing the light for reading out the original document through the window 5 towards the original document.

With the above-described embodiment, data lying along a straight line may be read by virtue of the function of the prisms 1a to 1c making up the optical block. For example, the light from the light source is radiated onto the original document surface G to be read out via the window 5, the prisms 1a to 1c and the lens array 3. The radiated light is reflected on the original document surface G in accordance with the characters or figures thereon. The reflected light is again incident on the lens array 3 to be then incident via the end faces 7a to 7c of the prisms 1a to 1c making up the optical block.

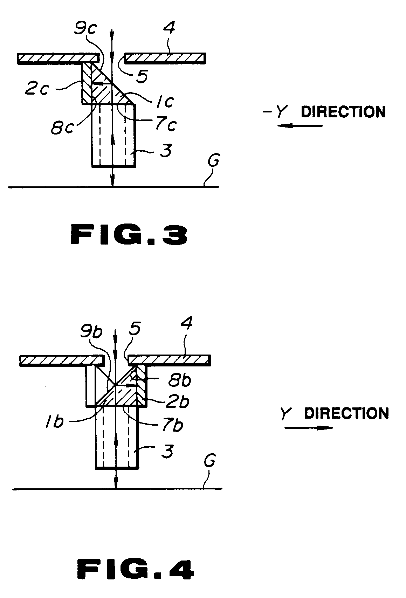

The light thus incident on the prisms 1a to 1c is routed along a path via the prism 1c or 1a different from a path via the prism 1b, as shown in Figures 3 and 4. Thus, as shown in Figure 3, the light incident on the end face 7c of the prism 1c is reflected at an inclined surface 9c of the prism 1c and directed therefrom towards the other end face 8c of the prism 1c along the -Y direction. The light exiting the prism 1c is received at the line sensor 2c provided on the other end face 8c of the prism 1c. On the other hand, the light incident on the end face 7b as shown in Figure 4 is reflected at the inclined surface 9b of the prism 1b and directed therefrom towards the other end face 8b of the prism 1b in the Y direction which is opposite to the light path for the prism 1c. The light exiting from the prism 1b is received by the line sensor 2b provided on the other end face 8b of the prism 1b.

Thus, the light exiting direction from a given prism differs from that from the adjacent prism or prisms. Hence, when reading out original document data extending along a straight line, there is no need to provide line sensors along a straight line corresponding to the straight line of the data, so that the problem of maintaining precision in bonding the line sensors together may be resolved satisfactorily. For this reason, there is no need to provide a memory, as in the case in which the prisms are in a staggered array, thus providing convenience in size enlargement or reduction.

It should be noted that the number of prisms making up the optical block of the image sensor need not be three, but may be any number other than unity depending on the size of the line sensors or that of the original document to be read out. As for the position of the light source, a linear light source or an array of point light sources may also be provided on the lateral side of the optical block, in lieu of providing the light source or the array of light sources for irradiating the original document via the window 5.

## Claims

1. An image sensor to read out data along a straight line from an original document (G), the sensor comprising:
a straight-shaped focusing rod lens array (3) having a length related to the original document read-out width, the focusing rod lens array having an optical axis extending normal to an original document surface (G), a light-entrance side opposable to the original document and a light-exit side opposite the light-entrance side;
characterised by;
a plurality of prisms (1) each in the form of a triangular prism (1) disposed end- to-end along the original document scanning direction and each having a cross-section along a direction normal to said scanning direction in the form of a right-angled triangle, each of the prisms (1) being mounted with a first one (7) of the surfaces (7, 8) thereof which define the right angle facing the light exit side of the focusing rod lens array (3), and with the other surfaces (8, 9) of alternate ones of the prisms facing in different directions to one another;
a plurality of line sensors (2) mounted adjacent to those (8) of said other surfaces (8, 9) which define the right angle and having light-receiving surfaces lying parallel to the original document scanning direction; and
a substrate (4) having a straight-shaped slit (5) for a read-out light source, the slit (5) being in register with the optical axis of the focusing rod lens array (3).

## Patentansprüche

1. Bildsensor zum Lesen von Daten entlang einer Geraden aus einem Originaldokument (G), wobei der Sensor aufweist:
eine geradlinig geformte Fokussierungsstablinsengruppe (3), die eine Länge hat, die in einer Beziehung zur Lesebreite des Originaldokuments steht, wobei die Fokussierungsstablinsengruppe eine optische Achse, die sich senkrecht zu einer Originaloberfläche (G) erstreckt, eine Lichteintrittsseite, die gegenüber dem Originaldokument angeordnet werden kann, und eine Lichtaustrittsseite gegenüber der Lichteintrittsseite aufweist,
gekennzeichnet durch
mehrere Prismen (1), jedes in Form eines dreiecksförmigen Prismas (1), die Stoß an stoß entlang der Abtastrichtung des Originaldokuments angeordnet sind und wobei jedes einen Trennschnitt entlang einer Richtung senkrecht zur Abtastrichtung in Form eines rechtwinkligen Dreiecks hat, wobei jedes der Prismen (1) mit einer ersten (7) von seinen Flächen (7, 8), die den rechten Winkel festlegen, welche der Lichtaustrittsseite der Fokussierungsstablinsengruppe (3) gegenüberliegt, und mit den anderen Flächen (8, 9) von sich abwechselnden Flächen der Prismen, die in unterschiedlichen Richtungen einander gegenüberliegen, aneinander befestigt ist;
mehrere Zeilensensoren (2), die benachbart zu denjenigen (8) der genannten anderen Flächen (8, 9) befestigt sind, die den rechten Winkel festlegen, und Lichtempfangsflächen haben, die parallel zur Abtastrichtung des Originaldokuments liegen; und
ein Substrat (4), das einen geradlinig geformten Schlitz (5) für eine Lese-Lichtquelle aufweist, wobei der Schlitz (5) mit der optischen Achse der Fokussierungsstablinsengruppe (3) fluchtet.

## Revendications

1. Un capteur d'image pour lire des données le long d'une ligne rectiligne, à partir d'un document original (G), le capteur comprenant :
un arrangement (3) de lentilles en barre, focalisantes, conformé rectiligne, ayant une longueur en relation avec la largeur de lecture de document original, l'arrangement de lentilles en barre, focalisantes, ayant un axe optique s'étendant perpendiculairement à une surface (G) de document original, un côté d'entrée de lumière opposable au document original et un côté de sortie de lumière à l'opposé du côté d'entrée de lumière ;
caractérisé par ;
une pluralité de prismes (1), chacun en forme d'un prisme triangulaire (1), disposés extrémité contre extrémité le long de la direction d'exploration de document original, et ayant chacun une section transversale le long d'une direction perpendiculaire à ladite direction d'exploration en forme d'un triangle rectangle, chacun des prismes (1) étant monté avec une première (7) des surfaces (7, 8) de celui-ci, qui définissent l'angle droit, faisant face au côté de sortie de lumière de l'arrangement (3) de lentilles en barre, focalisantes, et avec les autres surfaces (8, 9), différentes de la première des prismes, faisant face dans des directions différentes l'une de l'autre ;
une pluralité de capteurs de ligne (2), montés adjacents à ceux (8) desdites autres surfaces (8, 9), qui définissent l'angle droit, et ayant des surfaces de réception de lumière se trouvant parallèles à la direction d'exploration de document original ; et
un substrat (4) ayant une fente conformée rectiligne (5) pour une source de lumière de lecture, la fente (5) étant en alignement avec l'axe optique de l'arrangement (3) de lentilles en barre, focalisantes.
